Europäisches Patentamt

European Patent Office

Office européen des brevets

(11) Publication number: **0 105 710**
**B1**

# EUROPEAN PATENT SPECIFICATION

(45) Date of publication of patent specification: **24.08.88**

(51) Int. Cl.⁴: **G 06 F 11/14**

(21) Application number: **83305828.2**

(22) Date of filing: **28.09.83**

(54) Method for recovering from error in a microprogram-controlled unit.

(30) Priority: **28.09.82 JP 168912/82**

(43) Date of publication of application:
**18.04.84 Bulletin 84/16**

(45) Publication of the grant of the patent:
**24.08.88 Bulletin 88/34**

(84) Designated Contracting States:
**DE FR GB**

(56) References cited:
**GB-A-1 315 673**
**US-A-3 736 566**
**US-A-4 112 502**
**US-A-4 231 089**

**IBM TECHNICAL DISCLOSURE BULLETIN, vol.**
**14, no. 2, July 1971, pages 358-361, New York,**
**US; J.G. EARLE et al.: "Multiprocessing**
**checkpoint retry"**

(73) Proprietor: **FUJITSU LIMITED**
**1015, Kamikodanaka Nakahara-ku**
**Kawasaki-shi Kanagawa 211 (JP)**

(72) Inventor: **Sato Kiyosumi Gurin-Kopo B511**
**1496-1, Mukaigaoka Miyamae-ku**
**Kawasaki-shi Kanagawa 213 (JP)**
Inventor: **Shimizu, Kazuyuki**
**19-22, Ogawa 2-chome**
**Machida-shi Tokyo 194 (JP)**

(74) Representative: **Sunderland, James Harry et al**
**HASELTINE LAKE & CO Hazlitt House 28**
**Southampton Buildings Chancery Lane**
**London WC2A 1AT (GB)**

(56) References cited:
**IBM TECHNICAL DISCLOSURE BULLETIN, vol.**
**18, no. 3, August 1975, pages 897-898, New**
**York, US; G.R. MITCHELL: "CPU**
**microinstruction retry"**

Courier Press, Leamington Spa, England.

## Description

The present invention relates to a microprogram-controlled unit, more specifically to a method of error detection and correction for microinstructions in a unit operated by microprograms, such as a so-called pipeline processor.

An error checking code (ECC) is usually added to each microinstruction to be stored in a control storage of a microprogram-controlled unit so as to increase the microinstruction reliability. When decoded, the ECC enables one to check whether the microinstruction is correct or includes an error.

Conventionally, the ECC decoding operation is effected in parallel with execution of the microinstruction read from the control storage. This is because it takes a relatively long time to decode the ECC. Sequential operation of the ECC decoding operation and execution of the microinstruction would therefore adversely affect the operation speed of the microprogram-controlled unit.

During this parallel operation and execution, detection of any error immediately stops the execution of the erroneous microinstruction. The microinstruction is then corrected and reexecuted in a "retry" operation.

If the error is in a fixed bit in the control storage, however, the above process is repeated each time the microinstruction including that erroneous bit is specified. This reduces the efficiency of the microprogram-controlled unit.

From US—A—4 112 502 it is known to conditionally bypass the error correction function of a random access memory (RAM) when no error is detected in the read data. In this system, a content addressable memory is utilised to store the addresses of RAM locations in which an error was previously detected.

The problem is particularly severe in a pipeline processor. In such a processor, a plurality of microinstructions are executed simultaneously. Therefore, the retry operation must be started not just from the erroneous microinstruction, but back from a few preceding microinstructions.

An embodiment of the method of the present invention can overcome the problem of reduced efficiency in a microprogram-controlled unit, that is, enable recovery of the unit from a fixed error in a short time.

In a method embodying the present invention an initial retry operation is effected under an interlock mode. In the initial retry operation, the microinstruction including the erroneous bit in the control storage and some of the preceding microinstructions are processed to detect and correct the error, then are all reexecuted, as in the previous manner. Simultaneously, however, the address specifying the erroneous microinstruction is recorded. When the address specifying the erroneous microinstruction is accessed in the control storage again, the processor operates under the interlock mode for only the erroneous microinstruction rather than repeating the retry operation.

Reference is made by way of example, to the accompanying drawings in which:

Fig. 1 is a diagram of a circuit adapted to carry out an embodiment of a method of the present invention;

Fig. 2A is a timing chart explaining a usual operation in a processing unit;

Fig. 2B is a timing chart explaining a retry operation according to an embodiment of the present invention; and

Fig. 2C is a timing chart explaining recovery from a second or later occurrence of an error according to an embodiment of the present invention;

Fig. 3 is a detailed example of a part of the circuit shown in Fig. 1.

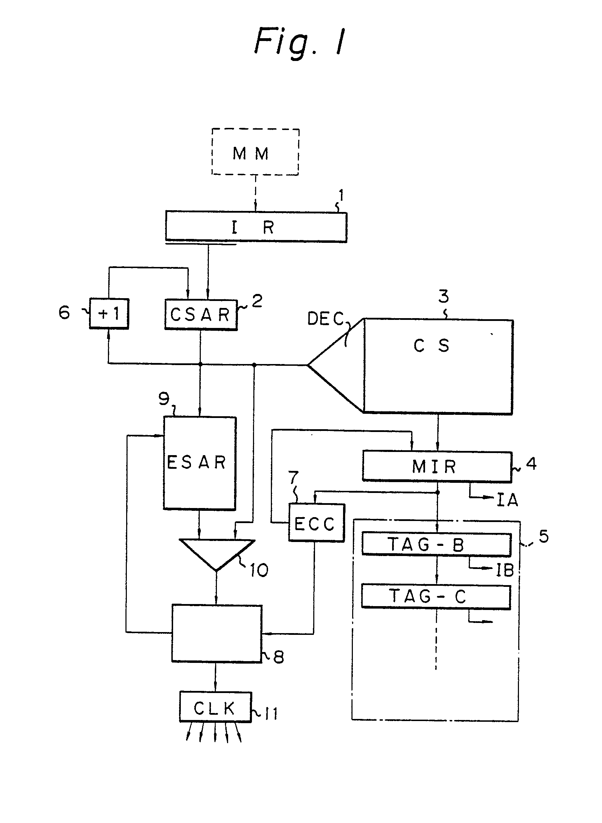

Figure 1 is a diagram of a circuit adapted to carry out an embodiment of the method of the present invention. In Fig. 1, reference numeral 1 represents an instruction register (IR). Each instruction stored in the register 1 is an absolute instruction supplied from a main memory MM. Initial values of the registered instructions, i.e., operation code parts, are set in a control storage address register (CSAR) 2. In other words, addresses for specifying microinstructions are stored in the register 2. These allow the microinstructions to be read from a control storage (CS) 3. Successive microinstructions of the absolute instruction loaded in the register 1 are sequentially and automatically produced from the control storage 3 by means of an address update circuit (+1) 6, which increments the address in the register 2 every time an address is supplied to a decoder DEC of the storage 3. In other words, incremental addresses for specifying successive microinstructions in the storage 3 are generated from the register 2 with the aid of the circuit 6. Alternatively, the so-called next address method may be employed.

Each microinstruction is read from the storage 3 and set directly in a microinstruction register (MIR) 4. Each microinstruction is transferred sequentially to tags B, C, and so on, mounted in a pipeline processing part 5 for storage until used as microinstructions IA, IB, and so on. The tags B, C, and so on function as registers. The microinstructions stored therein are provided for running the pipeline processing unit 5.

Simultaneously, the content of the register 4 is checked by means of an error detection and correction circuit (ECC) 7. If the circuit 7 indicates there is no error in content, the content is sequentially transferred, as mentioned above, to the tags B, C, and so on.

On the other hand if the circuit 7 indicates there is an error, the processing is immediately stopped. Soon after this, the retry operation commences.

The retry operation must be performed not only on the erroneous microinstruction, but also on some preceding microinstructions. That is, the retry operation is performed by returning to the initial microinstruction of the related absolute instruction. This is necessary since there is a

2

possibility that, in pipeline processing, the initial microinstruction is not yet completed when the erroneous microinstruction is detected.

According to the present invention, the retry operation is effected under an interlock mode. The term "interlock" here means that the circuit checks each microinstruction by ECC, corrects any erroneous microinstruction it detects, and rewrites the correct microinstructions into the register 4. After this, one step is inserted into each process of the register 2, the storage 3, the register 4, and tags B, C, and so on, so as to synchronize the operations in the processor.

During the retry operation, the circuit 7 also performs an identical correction for correct microinstructions, however, maintains the gist thereof as they are not erroneous.

After the absolute instruction has been thus processed under the interlock mode, the next absolute instruction is loaded into the register 1 from the main memory MM. The newly loaded absolute instruction defines corresponding pipeline microinstructions stored in the storage 3. These microinstructions are executed in parallel with the decoding operation by using their respective ECC's, as usual.

During the retry operation, the address specifying the erroneous microinstruction is further recorded in an error address storing register (ESAR) 9. Once recorded, the error address is continuously compared by a comparator circuit 10 with addresses indicated as operation code parts of instructions stored in the register 2. When there is coincidence, i.e., the address of the erroneous microinstruction is detected, the processor operates under the interlock mode for only that erroneous microinstruction. The insertion of the extra time step required for synchronization is effected by means of a timing control circuit 8 and a clock control circuit 11.

It should be understood that the register 9 may record a plurality of error addresses. Thus, if two or more error bits exist in the storage 3, the register 9 can record them. In this case, one must provide a plurality of comparator circuits. When any one of the comparator circuits indicates a coincidence, the processor will then operate under the interlock mode for the related microinstruction.

Thus, the retry operation is performed only for the first occurrence of the erroneous instruction. In subsequent occurrences, operation under the interlock mode is necessary only for the erroneous instruction. This enables a smoother flow of pipeline processing. It is important to note that time required for the interlock mode operation is considerably shorter than that for the retry operation.

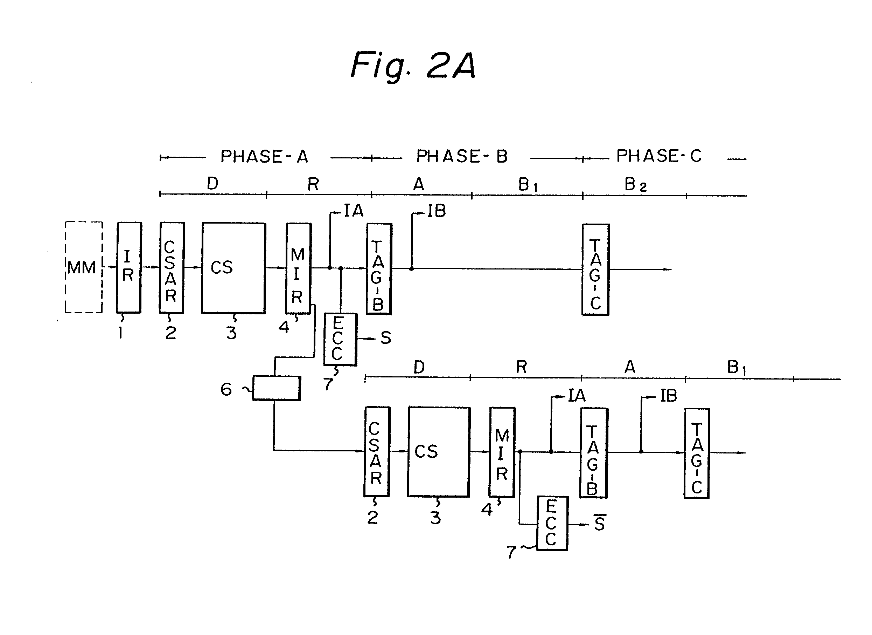

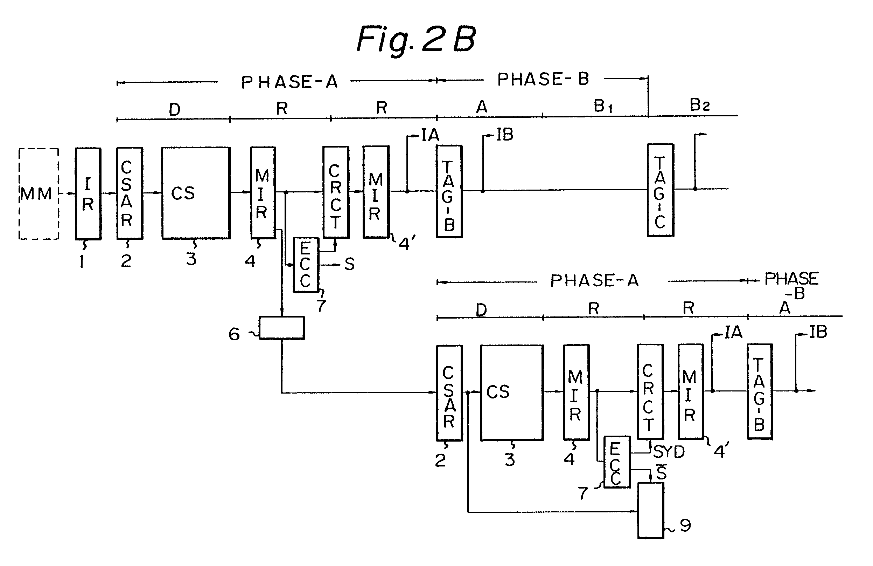

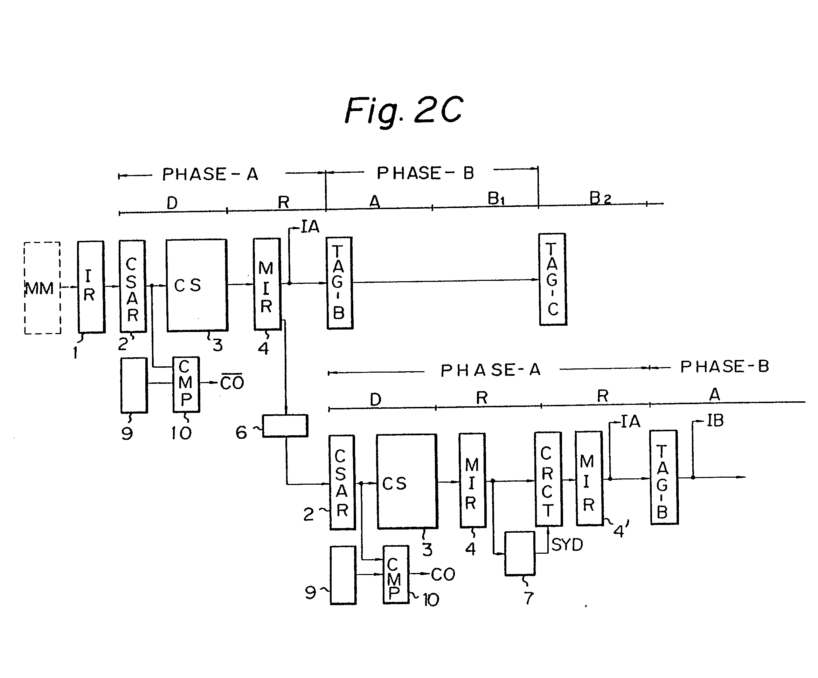

The method according to the present invention will be further clarified with reference to Figs. 2A, 2B, and 2C. Figure 2A is a timing chart illustrating usual operation in a processor. In Fig. 2A, as well as Figs. 2B and 2C, the main memory MM, the instruction register (IR) 1, the control storage address register (CSAR) 2, the control storage (CS) 3, the microinstruction register (MIR) 4, tags B, C, the address update circuit (+1) 6, and the error detection and correction circuit (ECC) 7 are identical to those shown in Fig. 1.

The operation stages are segmented into PHASE-A, PHASE-B, PHASE-C, and so on, as shown. PHASE-A, contains a step D, i.e., a decoding cycle, and a step R, i.e., a register read cycle. PHASE-B contains a step A, i.e., an address calculation cycle, and a step $B_1$, i.e., a buffer read cycle. PHASE-C contains a step $B_2$, i.e., another buffer read cycle. These steps are advanced in synchronism with the so-called machine cycle. It should be understood that the above steps are merely examples and are in practice determined according to the architecture of each machine (processing unit).

The flow of the data from the memory MM to the register 4 is as already explained. A part IA of the microinstructions is used for the operation of the processing unit. Simultaneously, the microinstruction is checked by the ECC 7. If the circuit 7 finds no error in the microinstruction, it issues a signal S. The circuit 6 then generates the next address for the register 2 and an identical operation is carried out with the microinstruction specified thereby. If the circuit 7 finds an error in this microinstruction, it issues a signal $\bar{S}$. This immediately stops the pipeline operation and initiates the retry operation.

Figure 2B is a timing chart explaining a retry operation according to the present invention. The retry operation is achieved under the interlock mode. That is, the circuit 7 checks each microinstruction by using the ECC. If the microinstruction is correct, a dummy correcting operation "CRCT" is performed and the gist thereof is maintained as it is in the register 4'. It should be noted that the register 4' is the same as the register 4, but illustrated for clarifying the time series.

On the other hand, if the microinstruction is not correct, the circuit 7 issues the signal $\bar{S}$. At this time, the correcting operation "CRCT" for the erroneous microinstruction is carried out by a so-called syndrom SYD generated from the circuit 7. The thus corrected microinstruction is set in the register 4'. In this case, the signal $\bar{S}$ activates the register 9 to record the error address therein from the register 2.

As is apparent from Fig. 2B, the retry operation is somewhat inefficient, because each of the microinstructions is dealt with in not one step, but two successive steps, i.e., the doubled steps R, due to the interlock mode. However, there is an advantage that all of the microinstructions are therefore guaranteed correct.

More particularly, once a retry operation is performed for a certain erroneous microinstruction, it need not be performed again for the microinstructions preceding the same erroneous microinstruction in the future.

Figure 2C is a timing chart explaining recovery from a second or later occurrence of an error according to the present invention. As mentioned above with reference to Fig. 2B, once a retry operation has been effected due to an erroneous microinstruction, the address specifying that microinstruction is recorded in the register 9. The comparator circuit 10 continually compares addresses from the register 2 with the address in the register 9. If the comparison indicates no coincidence "CO" therebetween, the pipeline operation continues as usual. If the comparison indicates coincidence "CO", the processor operates under the interlock mode for the erroneous microinstruction only. That is, the correcting operation "CRCT" is carried out by the syndrom SYD based on the related ECC so as to correct the erroneous microinstruction and restore it in the register 4'. In this case, the step R is doubled due to the interlock mode. However, such doubled steps take considerably shorter time than that required for the usual retry operation.

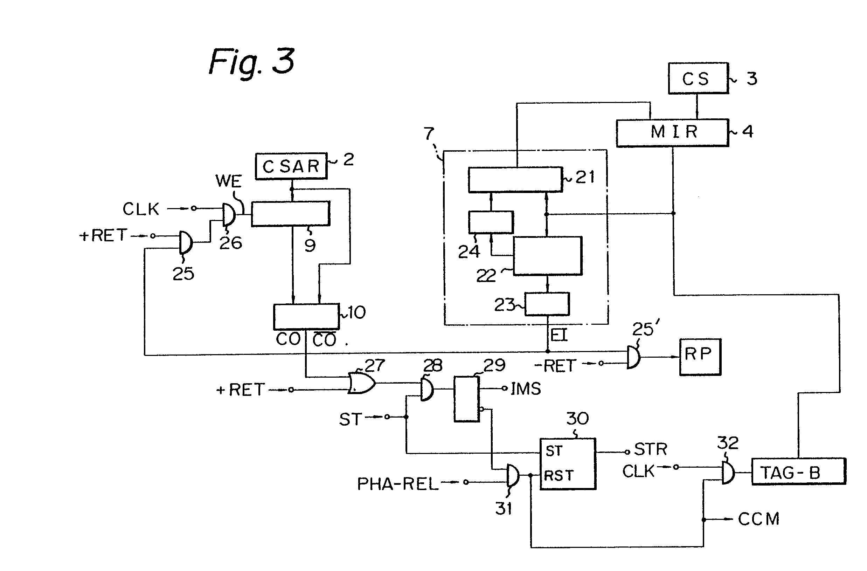

Figure 3 is a detailed example of a part of the circuit shown in Fig. 1. The detailed circuit is mainly directed to the circuit 7, the timing control circuit 8, and the clock control circuit 11 shown in Fig. 1. The circuit 7 receives data including the so-called Hamming code and applies the data to both a correcting circuit 21 and an error check circuit 22. The error check circuit 22 activates, on one hand, an error-indicating flip-flop 23 and, on the other hand, a register 24 storing the syndrom used for correction of the erroneous microinstruction. The error indication signal EI of logic "1", if an error exists, is supplied from the flip-flop 23 to both AND gates 25 and 25'. If the retry operation is not being performed, a signal −RET is provided from a retry processing part RP (not shown). If the retry operation is now being performed, a signal +RET is provided.

Regarding the AND gate 25', when the signal −RET and the error indication signal EI are both active, the output from the AND gate 25' triggers the part RP so as to commence the retry operation. Regarding the AND gate 25, when the signal +RET and the signal EI are both active, the output of the AND gate 25 opens an AND gate 26 to permit passage of a clock signal CLK as a write enable signal WE, so that the erroneous address in the register 2 is recorded in the register 9. The recorded address is compared by the comparator circuit 10 with the address in the register 2.

The circuit 10 produces the aforesaid coincidence signal CO or noncoincidence signal $\overline{CO}$. The signal CO of logic "1" and/or the signal +RET can pass through an OR gate 27. If a status signal ST indicates that the present stage is located in the step D (refer to Figs. 2B and 2C), an AND gate 28 is opened to permit passage of the signal CO, in the case of Fig. 2C, and the signal +RET, in the case of Fig. 2B.

The output from the AND gate 28 sets a flip-flop 29, the output of which indicates the interlock mode state IMS. The signal ST, on the other hand, sets a flip-flop 30 at its set input ST, the output of which indicates that the step R (STR) now runs. The flip-flop 30 is reset by a status signal of PHA-REL which is usually produced, in a pipeline processor, for permitting a transition of state from PHASE-A to the PHASE-B (refer to Fig. 2A. The characters REL denote release).

If the signal PHA-REL is directly applied to the flip-flop 30 at its reset input RST, the doubled steps of B (refer to Figs. 2B and 2C) would not be obtained. Therefore, the signal PHA-REL is applied to the input RST via an AND gate 31. The AND gate 31 is opened when the inverted output of the flip-flop 29 is logic "1". In other words, only in a case where the interlock mode state IMS is created, the AND gate 31 is not opened, and, therefore, the step R is doubled. Thus, the signal PHA-REL is supplied from the AND gate 31, which signal is also used to open an AND gate 32 and is further supplied to another clock control means CCM.

**Claims**

1. A method for recovering from an error in a microprogram-controlled unit, the microprogram-controlled unit being comprised of at least a control storage (3) for storing microinstructions used in executing absolute instructions, a control storage address register (2) storing an address for specifying the microinstruction, a microinstruction register (4), and other serially-connected tag registers, in multistage with the microinstruction register, and an error detection and correction circuit (7) operative to check a validity of each microinstruction stored in the microinstruction register (4) and correct an erroneous microinstruction to be restored in the microinstruction register, in which the error check by the error detection and correction circuit for each microinstruction is carried out in parallel with execution of each microinstruction, which method comprises the operations of:

(a) detecting whether or not each microinstruction includes an error;

(b) performing a retry operation for the microinstructions related to the same absolute instruction, including the detected erroneous microinstruction, under an interlock mode, in which interlock mode the erroneous microinstruction and the related preceding microinstructions are successively subjected to error detection and correction, followed by reexecution;

(c) recording an address specifying the erroneous microinstruction; and

(d) performing an interlock mode operation for only the erroneous microinstruction when the address for the erroneous microinstruction is again accessed.

2. A method as set forth in claim 1, wherein the reaccessing of the address for the erroneous microinstruction is detected by comparing each address in said control storage address register with said recorded address specifying the erroneous microinstruction, which recorded address has been stored in an error address storing register (9).

3. A method as set forth in claim 2, wherein said address to be recorded is for fixedly occurring erroneous microinstructions only.

4. A method as set forth in claim 3, wherein said error address storing register records the same address stored in said control storage address register just at the time the error is detected in said operation of (b).

5. A method as set forth in claim 1, wherein said interlock mode is created by doubling a certain one of the steps each defined by a machine cycle of said unit.

**Patentansprüche**

1. Verfahren zur Wiederherstellung nach einem Fehler in einer durch ein Mikroprogramm gesteuerten Einheit, welche mikroprogrammgesteuerte Einheit aus wenigstens einem Steuerspeicher (3) zur Speicherung von Mikrobefehlen, die bei der Ausführung absoluter Befehle verwendet werden, ein Steuerspeicheradressenregister (2) zum Speichern einer Adresse zum Spezifizieren des Mikrobefehls, ein Mikrobefehlsregister (4), und andere seriell in Multistufen mit dem Mikrobefehlsregister angeschlossene Kennzeichenregister, und eine Fehlderdetektor- und -korrekturschaltung (7) umfaßt, welche betreibbar ist, um die Gültigkeit von jedem Mikrobefehl, der in dem Mikrobefehlsregister (4) gespeichert ist, zu prüfen und einen fehlerhaften Mikrobefehl zu korrigieren, der in das Mikrobefehlsregister zurückgespeichert wird, bei welchem die Fehlerprüfung durch die Fehlerdetektor- und -korrekturschaltung für jeden Mikrobefehl parallel mit der Ausführung von jedem Mikrobefehl durchgeführt wird, welches Verfahren die folgenden Operationen umfaßt:

(a) Detektieren, ob jeder Mirkobefehl einer Fehler enthält oder nicht;

(b) Durchführen einer Wiederholungsoperation für die Mikrobefehle, die sich auf denselben absoluten Befehl beziehen, einschließlich des detektierten fehlerhaften Mikrobefehls, in einem Verriegelungsmodus, bei welchem Verriegelungsmodus der fehlerhafte Mikrobefehl und die betreffenden vorhergehenden Mikrobefehle sukzessiv einer Fehlerdetektion- und -korrektur unterworfen werden, gefolgt von einer erneuten Ausführung;

(c) Aufzeichnen einer Adresse, welche den fehlerhaften Mikrobefehl spezifiziert; und

(d) Durchführung eines Verriegelungs-Betriebs für den fehlerhaften Mikrobefehl, wenn wieder zu der fehlerhaften Mikroadresse zugegriffen wird.

2. Verfahren nach Anspruch 1, bei dem der erneute Zugriff zu der Adresse für den fehlerhaften Mikrobefehl durch Vergleich jeder Adresse in dem genannten Steuerspeicheradressenregister mit der genannten aufgezeichneten Adresse, welche den fehlerhaften Mikrobefehl spezifiziert, detektiert wird, welche aufgezeichnete Adresse in einem Fehleradressenspeicherregister (9) gespeichert ist.

3. Verfahren nach Anspruch 2, bei dem die genannte Adresse, die gespeichert werden soll, lediglich für fix auftretende fehlerhafte Mikrobefehle ist.

4. Verfahren nach Anspruch 3, bei dem das genannte Fehleradressenspeicherregister dieselbe Adresse aufzeichnet, die in dem genannten Steuerspeicheradressenregister gerade bis zu der Zeit gespeichert ist, wenn der Fehler bei der Durchführung von (b) detektiert wird.

5. Verfahren nach Anspruch 1, bei dem der genannte Verriegelungsmodus durch Verdoppeln eines gewissen der Schritte, die jeweils durch einen Maschinenzyklus der Einheit definiert sind, geschaffen wird.

**Revendications**

1. Procédé pour corriger une erreur dans une unité commandée par microprogrammes, l'unité commandée par microprogrammes étant constituée d'au moins une mémoire de contrôle (3) pour mémoriser des micro-instructions utilisées dans l'exécution d'instructions absolues, un registre d'adresse de mémoire de contrôle (2) mémorisant une adresse pour spécifier la micro-instruction, un registre de micro-instruction (4), et d'autres registres indicateurs connectés en série dans plusieurs étages avec le registre de micro-instruction, et un circuit de détection et de correction d'erreurs (7) servant à contrôler la validité de chaque micro-instruction mémorisée dans le registre de micro-instruction (4) et corriger une micro-instruction erronée à rétablir dans le registre de micro-instruction, dans lequel le contrôle d'erreur fait par le circuit de détection et de correction d'erreurs pour chaque micro-instruction est exécuté en parallèle avec l'exécution de chaque micro-instruction, ce procédé consistant à:

(a) détecter si chaque micro-instruction inclut ou non une erreur;

(b) exécuter une opération de tentative de relance pour les micro-instructions relatives à la même instruction absolue incluant la micro-instruction erronée détectée, dans un mode de verrouillage, dans lequel mode de verrouillage la micro-instruction erronée et les micro-instructions précédentes relatives sont soumises successivement à une détection et une correction d'erreurs, suivies par une réexécution;

(c) enregistrer une adresse spécifiant la micro-instruction erronée; et à

(d) exécuter une opération de mode de verrouillage uniquement pour la micro-instruction erronée quand l'adresse pour la micro-instruction erronée fait à nouveau l'objet d'un accès.

2. Procédé selon la revendication 1, dans lequel le nouvel accès à l'adresse pour la micro-instruction erronée est détecté en comparant chaque adresse contenue dans le registre d'adresse de mémoire de contrôle à l'adresse enregistrée spécifiant la micro-instruction erronée, cette adresse enregistrée ayant été mémorisée dans un registre de mémorisation d'adresse d'erreur (9).

3. Procédé selon la revendication 2, dans lequel l'adresse à enregistrer n'est destinée qu'aux micro-instructions erronées se produisant de façon fixe.

4. Procédé selon la revendication 3, dans lequel le registre de mémorisation d'adresse d'erreur enregistre la même adresse mémorisée dans le registre d'adresse de mémoire de contrôle juste au moment où l'erreur est détectée dans l'opération (b).

5. Procédé selon la revendication 1, dans lequel le mode de verrouillage est créé en doublant un certain pas parmi les pas définis chacun par un cycle machine de l'unité.

# Fig. 1

# Fig. 2A

*Fig. 2 B*

Fig. 2C

Fig. 3